# EUROPÄISCHE PATENTSCHRIFT

(11) **EP 2 671 773 B1**
(45) Veröffentlichungstag und Bekanntmachung des Hinweises auf die Patenterteilung: **20.04.2016**
(21) Anmeldenummer: 13167087.9
(22) Anmeldetag: 08.05.2013
(51) Int. Cl.: B62B 3/02

(54) **Transportwagen und Verfahren zum vorzugsweise staplerfreien Transport und Umschlag von Transportgut mittels eines solchen Transportwagens**
Transport vehicle and method for the transport, preferably for transport without a forklift and handling of goods to be transported by means of such a transport vehicle
Véhicule de transport et procédé pour le transport de préférence sans chariot élévateur et manipulation de produits de transport au moyen d'un tel véhicule de transport

(30) Priorität: 06.06.2012 DE 102012104902
(43) Veröffentlichungstag der Anmeldung: 11.12.2013
(73) Patentinhaber: Feil GmbH, 59909 Bestwig-Nuttlar (DE)
(72) Erfinder: Feil, Monika, 59909 Bestwig (DE); Jostkleigrewe, Heinrich, 33442 Herzebrock-Clarholz (DE)
(74) Vertreter: Nunnenkamp, Jörg

(56) Entgegenhaltungen:
- DE-A1- 3 017 129
- DE-U1- 29 703 617
- DE-U1-202009 004 554

## Beschreibung

Die Erfindung betrifft die Kombination aus einem Transportwagen zur Aufnahme von Transportgut und einer Übergabe-/Übernahmeeinrichtung, vorzugsweise für die Versorgung von Fertigungs- bzw. Montagelinien der industriellen Serienfertigung, wobei der Transportwagen mit einem mit Laufrollen bestückten Fahrgestell, und mit einer das Transportgut tragenden Plattform ausgerüstet ist, wobei ferner zusätzlich wenigstens eine Führungseinheit am Transportwagen zur Ankopplung an die Übergabe-/Übernahmeeinrichtung für das Transportgut vorgesehen ist, und wobei die Führungseinheit mit wenigstens einer Gegenführungseinheit an der Übergabe-/Übernahmeeinrichtung zur Ankopplung wechselwirkt.

Eine Kombination des eingangs beschriebenen Aufbaus ist Gegenstand des Gebrauchsmusters DE 297 03 617 U1. Hier geht es um eine Transporteinrichtung, welche durch eine Ankopplungsvorrichtung zur lösbaren Verbindung eines Transportwagens und eines Übernahmewagens gekennzeichnet ist. Zu diesem Zweck ist eine Führungsnut vorgesehen, welche von der Vorderkante des einen Wagens schräg nach hinten verläuft. Außerdem ein Führungsstift, der an dem anderen Wagen realisiert ist und mit der Führungsnut zusammenwirkend ausgestaltet und angeordnet ist. Außerdem sind zusätzliche Riegelmittel zur lösbaren Verbindung der beiden Wagen obligatorisch.

Die Ankopplung erfordert zwingend eine Schwenkbewegung des einen Wagens gegenüber dem anderen Wagen, was mit erheblicher Kraftanstrengung verbunden ist, wobei zugleich die beiden Wagen gegeneinander verriegelt werden müssen. Dieser komplizierte Ausricht- und Verriegelungsvorgang ist für logistische Anforderungen bei der industriellen Serienfertigung in Fabrikationsanlagen mit den dortigen rauen Bedingungen kaum geeignet.

Die DE 30 17 129 A1 befasst sich mit einer vergleichbaren Kombination aus einem Lastenfahrzeug und einem Fahrzeugkörper. Zusätzliche Verriegelungsmittel sorgen dafür, dass das Lastenfahrzeug in gewünschter Lage relativ zu dem Fahrzeugkörper verriegelbar ist. Auch in diesem Fall wird eine exakte Ausrichtung gefordert, die sich bei industriellen Anwendungen kaum umsetzen und realisieren lässt.

Ein Transportwagen und insbesondere Routenzug-Transportwagen wird beispielsweise in der europäischen Patentanmeldung EP 2 428 428 A1 der Anmelderin beschrieben. Solche Transportwagen kommen beispielhaft und nicht einschränkend in der Logistikbranche oder auch der Nahrungsmittelindustrie zum Einsatz und werden dort üblicherweise für den innerbetrieblichen Warenverkehr genutzt. So lassen sich mit Hilfe solcher Transportwagen beispielsweise Kleinteile-Ladungsträger oder auch Schüttgüter problemlos transportieren.

An dieser Stelle ist man heutzutage zunehmend bestrebt, für einen staplerfreien Transport und Umschlag des Transportgutes in Werkshallen mit Fertigungs- bzw. Montagelinien der industriellen Serienfertigung zu sorgen. Denn der Staplerverkehr stellt in den Werkshallen ein wesentliches Problem dar, insbesondere was die Unfallgefahr aber auch den erforderlichen Platzbedarf sowie die notwendigen Investitionskosten angeht. Folgerichtig werden heutzutage typischerweise Ladungsträger vorkommissioniert, dann auf einen Transportwagen überführt und werden diese Transportwagen beispielsweise zu einem sogenannten Routenzug zusammengefasst.

Hierbei handelt es sich um Trailerzuganhänger bzw. die zuvor bereits angesprochenen Transportwagen-(Anhänger), die beispielsweise zu mehreren zusammengefasst und mit Hilfe einer Zugmaschine in einem Zug- oder Schleppverband transportiert werden. In einem solchen Routenzug sind also meistens mehrere solcher Transportwagen zusammengekoppelt und werden gemeinsam an den gewünschten Ort verbracht. Dadurch werden bereits wesentliche Einsparungen in Investitions-, Betriebs-, und Personalkosten beobachtet. Gleichzeitig erhöht das im Vergleich zum Staplerverkehr geringere Verkehrsaufkommen auch die Sicherheit in den Betrieben.

Ganz abgesehen davon lässt sich mit solchen Transportwagen sowohl Material an- als auch abliefern. Dadurch können Leerfahrten auf ein Minimum reduziert werden. Das hat sich grundsätzlich bewährt. Allerdings fehlen bisher schlüssige Konzepte, was insbesondere das Umladen bzw. den Umschlag des Transportgutes von dem betreffenden Transportwagen als Bestandteil beispielsweise des Routenzuges an eine zugehörige Übergabe-/Übernahmeeinrichtung angeht. Tatsächlich wird hier in der Praxis oftmals so vorgegangen, dass der das jeweils gewünschte Transportgut tragende Transportwagen aus dem Routenzug abgekoppelt und beispielsweise von Hand gegenüber der Übergabe-/Übernahmeeinrichtung positioniert wird, um dann das Transportgut entweder an die betreffende Übergabe-/Übernahmeeinrichtung zu übergeben oder von dieser aufzunehmen. Es ist offensichtlich, dass eine solche Vorgehensweise Verbesserungen erfordert, weil der personelle Aufwand groß ist und darüber hinaus die Handhabung des Transportgutes unter Umständen schwierig.

Hieran ändert auch der weitere Stand der Technik nach der DE 10 2010 033 677 A1 nichts. Zwar werden hier ein Transportwagen und ein Verfahren zum staplerfreien Transport und Umschlag beschrieben. Allerdings geht es an dieser Stelle um Entsorgungsbehälter und sind folglich spezielle Maßnahmen erforderlich, die zu einer insgesamt konstruktiv aufwändigen Lösung führen. Hier will die Erfindung insgesamt Abhilfe schaffen.

Der Erfindung liegt das technische Problem zugrunde, eine derartige Kombination aus einem Transportwagen zur Aufnahme von Transportgut sowie der zugehörigen Übergabe-/Übernahmeeinrichtung so weiter zu entwickeln, dass der Umschlag des Transportgutes möglichst einfach und zielgenau durchgeführt werden kann. Außerdem soll ein entsprechendes Verfahren zum staplerfreien Transport und Umschlag des Transportgutes angegeben werden.

Zur Lösung dieser technischen Problemstellung ist eine gattungsgemäße Kombination aus dem Transportwagen zur Aufnahme von Transportgut und der Übergabe-/Übernahmeeinrichtung im Rahmen der Erfindung dadurch gekennzeichnet, dass die Führungseinheit als im Wesentlichen in Transportrichtung des Transportwagens verlaufend ausgerichtete Führungsschiene und die Gegenführungseinheit als in die Führungsschiene einfädelbare Rollenanordnung ausgebildet ist, wobei sich die Rollenanordnung aus einzelnen in der Transportrichtung angeordneten Rollen zusammensetzt, die jeweils an die Übergabe-/Übernahmeeinrichtung angeschlossen sind.

Bei der Übergabe-/Übernahmeeinrichtung für das Transportgut handelt es sich typischerweise um eine Plattform oder eine andere Einrichtung, die zur Aufnahme des Transportgutes von der Plattform des Transportwagens einerseits oder zur Übergabe von Transportgut an den Transportwagen andererseits geeignet und eingerichtet ist. Im Rahmen der Erfindung kann die Übergabe-/Übernahmeeinrichtung ortsfest oder auch ortsvariabel ausgelegt sein. In letztgenanntem Fall verfügt die Übergabe-/Übernahmeeinrichtung regelmäßig über ein mit Laufrollen bestücktes Fahrgestell.

Außerdem hat es sich bewährt, wenn die Plattform des Transportwagens einerseits und die Übergabe-/Übernahmeeinrichtung bzw. deren Plattform andererseits aneinander angepasst sind. Diese Anpassung meint im Wesentlichen, dass beide Plattformen überwiegend ebenengleich zueinander ausgelegt sind, so dass das Transportgut im Regelfall durch Schieben von der Plattform des Transportwagens auf die Plattform der Übergabe-/Übernahmerichtung und umgekehrt überführt werden kann. Um diese schiebende Bewegung des Transportgutes zu erleichtern, ist wenigstens eine bzw. sind meistens beide fraglichen Plattformen mit einer oder mehreren Rollendecken ausgerüstet. Diese Rollendecken stellen sicher, dass das Transportgut problemlos über die jeweilige Plattform schiebend verlagert werden kann, indem nämlich die betreffende Rollendecke bzw. deren Rollen in Rotation versetzt wird. Diese Auslegung ist selbstverständlich nur beispielhaft zu verstehen, da die Erfindung grundsätzlich natürlich auch jedwede andere Auslegungen der Plattform umfasst.

Jedenfalls sind im Regelfall die Plattform des Transportwagens einerseits und die Plattform der Übergabe-/Übernahmeeinrichtung andererseits aneinander angepasst, meistens im Wesentlichen ebenengleich zueinander angeordnet, so dass das Transportgut jeweils schiebend von der einen auf die andere Plattform übergeben werden kann. Um nun bei diesem Vorgang sicherzustellen, dass die Übergabe des Transportgutes einwandfrei und möglichst kraftarm erfolgen kann, ist erfindungsgemäß die Führungseinheit an dem Transportwagen vorgesehen. Mit Hilfe der Führungseinheit wird der Transportwagen an die Übergabe-/Übernahmeeinrichtung für das Transportgut angekoppelt. Das erfolgt meistens derart, dass die jeweiligen Plattformen ebenengleich oder überwiegend ebenengleich zueinander ausgerichtet werden. Außerdem wird die Ausrichtung meistens so vorgenommen, dass zugehörige Rollendecken von einerseits dem Transportwagen und andererseits der Übergabe-/Übernahmeeinrichtung mit übereinstimmender Bewegungsrichtung zueinander ausgerichtet werden.

Das erreicht die Erfindung dadurch, dass die Führungseinheit an dem Transportwagen mit der wenigstens einen Gegenführungseinheit an der Übergabe-/Übernahmeeinrichtung zur Ankopplung wechselwirkt. Bei der Führungseinheit handelt es sich erfindungsgemäß um die Führungsschiene, wohingegen die Gegenführungseinheit als in die Führungsschiene einfädelbare Rollenanordnung ausgebildet ist. Grundsätzlich können auch mehrere Führungsschienen die Führungseinheit an dem Transportwagen definieren. Ebenso mehrere Rollenanordnungen die Gegenführungseinheit.

Dabei verfügt die Führungseinheit bzw. Führungsschiene im Allgemeinen an ihrer Frontseite über einen Führungstrichter, mit dessen Hilfe die an der Übergabe-/Übernahmeeinrichtung vorhandene Rollenanordnung unschwer in die Führungsschiene eingefädelt werden kann. Als Folge hiervon sorgt die in die Führungsschiene eintauchende Rollenanordnung dafür, dass die Übergabe-/Übernahmeeinrichtung einerseits und der Transportwagen andererseits beim gegenseitigen Andocken zueinander ausgerichtet werden.

Dieser Ausrichtvorgang wird nicht nur für den jeweils anzudockenden Transportwagen beobachtet, sondern praktisch für den gesamten Routenzug. Tatsächlich sind die einzelnen Transportwagen derart spurstabil ausgelegt, dass der gesamte Routenzug gleichsam mit den zugehörigen Führungsschienen seiner einzelnen Transportwagen in die Rollenanordnung der Übergabe-/Übernahmeeinrichtung eingefädelt wird respektive eingefädelt werden kann, wenn der Routenzug an der Übergabe-/Übernahmeeinrichtung entlang bewegt wird. Hierbei geht die Erfindung von der Erkenntnis aus, dass im Regelfall der Transportwagen im Wesentlichen quer zur Längserstreckung der Übergabe-/Übernahmeeinrichtung verfahren wird. Bei diesem Vorgang wird die jeweilige Führungseinheit des Transportwagens mit der wenigstens einen Gegenführungseinheit an der Übergabe-/Übernahmeeinrichtung zur Wechselwirkung gebracht, so dass der Transportwagen an die Übergabe-/Übernahmeeinrichtung ankoppelt. Dadurch ist es grundsätzlich auch möglich, mit mehreren parallel zueinander angeordneten Übergabe-/Übernahmeeinrichtungen zu arbeiten, die in der Art eines Bahnhofes meistens parallel zueinander ausgerichtet nebeneinander angeordnet sind.

Jede diese Übergabe-/Übernahmeeinrichtungen verfügt meistens über eine eigene Gegenführungseinheit. Sobald nun der Routenzug aus dem erfindungsgemäßen Transportwagen im Wesentlichen quer zur Längserstreckung dieser einzelnen Übergabe-/Übernahmeeinrichtungen verfahren wird, kommt es automatisch zu der bereits beschriebenen Wechselwirkung zwischen der jeweiligen Führungsschiene einerseits und der Gegenführungseinheit bzw. zugehörigen Rollenanordnung andererseits. Tatsächlich ist die Führungseinheit bzw. Führungsschiene im Wesentlichen in Transportrichtung des Transportwagens verlaufend ausgerichtet. Vergleichbares gilt für die Rollenanordnung an der Übergabe-/Übernahmeeinrichtung.

Die Führungseinheit kann an das Fahrgestell und/oder die Plattform angeschlossen sein. Außerdem hat es sich bewährt, wenn mechanische und/oder elektronische Positioniermittel vorgesehen sind. Diese Positioniermittel dienen zur Ausrichtung des Transportwagens gegenüber der Übergabe-/Übernahmeeinrichtung.

Zu diesem Zweck können das eine oder die mehreren Positioniermittel an der Übergabe-/Übernahmeeinrichtung und/oder an oder auf einer Transportfläche angeordnet sein. Bei der Transportfläche mag es um einen Boden bzw. Hallenboden der bereits angesprochenen Werkshalle handeln, welcher ein mechanisches Positioniermittel beispielsweise in Gestalt von Markierungen auf dem Boden und/oder von Anschlägen trägt. Als elektronisches Positioniermittel schlägt die Erfindung beispielhaft Lichtschranken vor. Auch optische Positioniermittel in Gestalt eines Laserstrahls oder auch eines Lichtstrahls sind denkbar und werden von der Erfindung umfasst. Diese sämtlichen Positioniermittel sind in der Regel an oder auf der besagten Transportfläche, im Beispielfall dem Hallenboden, angeordnet.

Auf dieses Weise lassen sich sowohl der Transportwagen als auch die Übergabe-/Übernahmeeinrichtung gleichsam variabel positionieren, wobei in sämtlichen Fällen allerdings die Zuordnung zu beispielsweise einem Arbeitsplatz als Empfängerort für das Transportgut beibehalten wird. Denn die Übergabe-/Übernahmeeinrichtung kann sowohl ortsfest als auch ortsvariabel ausgebildet sein. Der Transportwagen wird per se zum Zwecke des Umschlages des Transportgutes bewegt. - Das Fahrgestell und die Plattform des Transportwagens lassen sich zur einzelnen und gemeinsamen Nutzung getrennt voneinander auslegen, wie dies prinzipiell bereits in der einleitend genannten EP 2 428 428 A1 beschrieben wird.

Im Ergebnis werden ein Transportwagen und ein Verfahren zum vorzugsweise staplerfreien Transport und Umschlag von Transportgut mit Hilfe des betreffenden Transportwagens beschrieben, die einen besonders schnellen und zielgerichteten Umschlag und Transport des Transportgutes zur Verfügung stellen. Hierzu trägt wesentlich das positionsgenaue Andocken des Transportwagens an die Übergabe-/Übernahmeeinrichtung bei. Tatsächlich erfährt der Transportwagen gleichsam "im Vorbeifahren" des Routenzuges eine Positionierung und Ausrichtung gegenüber der Übergabe-/Übernahmeeinrichtung. Wenn man so will wird der Transportwagen gleichsam tangential an die Übergabe-/Übernahmeeinrichtung herangeführt bzw. entlang dieser verfahren.

Sobald der Transportwagen eine vorgegebene Position gegenüber der Übergabe-/Übernahmeeinrichtung eingenommen hat, kann das von ihm getragene Transportgut problemlos durch beispielsweise Schieben auf die Übergabe-/Übernahmeeinrichtung überführt werden. Genauso gut ist ein umgekehrter Transport des Transportgutes auf den Transportwagen möglich und wird von der Erfindung umfasst.

Das alles gelingt ohne großen konstruktiven Aufwand sowie unter Berücksichtigung optimierter Transportwege und unter Verzicht auf etwaige zusätzliche Handhabungsmittel oder Transportmittel wie Stapler etc. Vielmehr können auch schwere Transportgüter praktisch problemlos von Bedienern per Hand und schiebend in der skizzierten Art und Weise an den gewünschten Ort verbracht werden. Hierin sind die wesentlichen Vorteile zu sehen.

Im Folgenden wird die Erfindung anhand einer lediglich ein Ausführungsbeispiel darstellenden Zeichnung näher erläutert; Die
- Fig. 1: zeigt einen erfindungsgemäßen Transportwagen perspektivisch und
- Fig. 2: den Transportwagen nach Fig. 1 beim Andocken an eine Übergabe-/Übernahmeeinrichtung für Transportgut.

In den Figuren ist ein Transportwagen dargestellt, bei dem es sich vorliegend um einen sogenannten Routenzug-Transportwagen handelt. Zu diesem Zweck verfügt der Transportwagen über ein mit Laufrollen 1 bestücktes Fahrgestell 2 sowie eine Plattform 3, 4, mit deren Hilfe in den Figuren nicht dargestelltes Transportgut transportiert wird. Die Plattform 3, 4 setzt sich im Ausführungsbeispiel aus zwei im Wesentlichen parallel zueinander angeordneten Rollendecken 3, 4 zusammen.

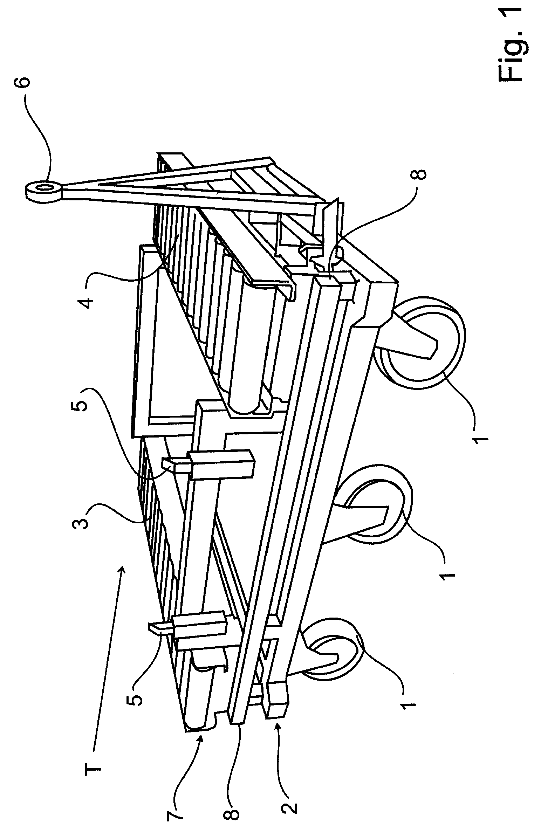

Die beiden Rollendecken 3, 4 verlaufen jeweils quer zur Transportrichtung T des dargestellten Transportwagens. Außerdem erkennt man anhand der Fig. 1, dass die beiden Rollendecken 3, 4 voneinander beabstandet sind und sich jeweils im Frontbereich bzw. Rückbereich des Fahrgestelles 2 befinden. Zwischen den beiden Rollendecken 3, 4 sind Elemente 5 zur Ladungssicherung angeordnet, die von untergeordneter Bedeutung sind, weil sie lediglich dazu dienen, das Transportgut auf der Plattform 3, 4 während des Transportes zu sichern. Je nach Auslegung und Größe des Transportgutes können die betreffenden Elemente 5 zur Ladungssicherung selbstverständlich auch entfallen und sind unter Umständen entbehrlich.

In der Fig. 1 erkennt man noch eine Deichsel 6, die gelenkig an den dargestellten Transportwagen bzw. seine Frontseite respektive die Frontseite des Fahrgestells 2 angeschlossen ist. Zu der Deichsel 6 korrespondiert eine lediglich angedeutete Kupplung 7 an der Rückseite des Transportwagens bzw. seines Fahrgestells 2. Auf diese Weise lassen sich die einzelnen in Fig. 1 dargestellten Transportwagen zu einem Routenzug zusammenfassen. Solche Routenzüge werden typischerweise für die Versorgung von Fertigungs- bzw. Montagelinien der industriellen Serienfertigung in Werkshallen eingesetzt.

Tatsächlich handelt es sich hierbei im Regelfall um Trailerzüge, welche aus einem Zugfahrzeug und einer Mehrzahl von Trailerzuganhängern bzw. den dargestellten Transportwagen zusammengesetzt sind, mit deren Hilfe das Transportgut bzw. die erforderlichen Bauteile transportiert werden. Im Regelfall sind die Bauteile auf Paletten oder in Gitterboxen untergebracht oder können mit Hilfe von sogenannten Transportwagen an den gewünschten Einsatzort verbracht werden. Die Routenzüge kommen typischerweise bei der maschinellen Serienfertigung von Automobilen zum Einsatz (vgl. EP 2 226 240 A1).

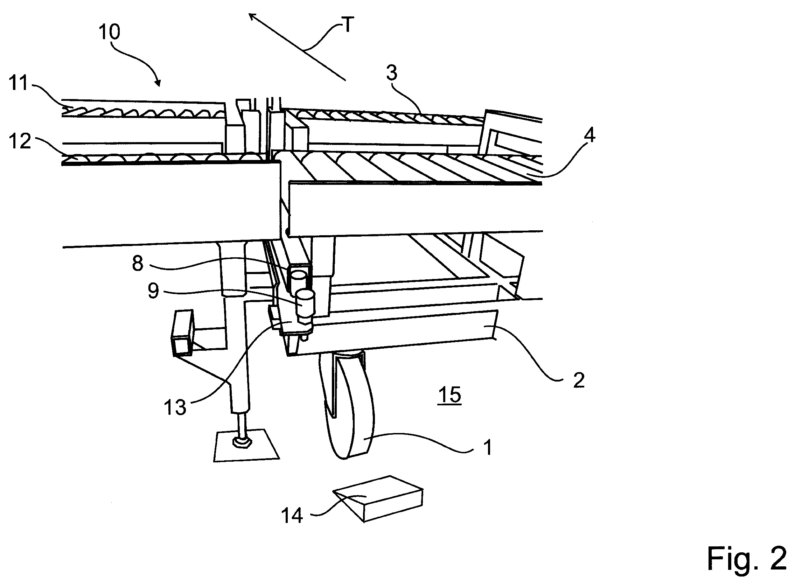

Erfindungsgemäß weist der Transportwagen zusätzlich zu dem mit den Laufrollen 1 bestückten Fahrgestell 2 und der das Transportgut tragenden Plattform 3, 4 wenigstens eine Führungseinheit 8 auf. Die Führungseinheit 8 dient zur Ankopplung des Transportwagens an eine Übergabe-/Übernahmeeinrichtung 10, die in der Fig. 2 prinzipiell dargestellt ist. Dazu wechselwirkt die Führungseinheit 8 an dem Transportwagen mit wenigstens einer Gegenführungseinheit 9 an der betreffenden Übergabe-/Übernahmeeinrichtung 10 zur Ankopplung des Transportwagens an dieselbige.

Anhand der Fig. 2 erkennt man, dass auch die Übergabe-/Übernahmeeinrichtung 10 für das Transportgut mit einer Plattform 11, 12 ausgerüstet ist. Wie im Falle der Plattform 3, 4 des Transportwagens, so setzt sich auch die Plattform 11, 12 der Übergabe-/Übernahmeeinrichtung 10 aus zwei Rollendecken 11, 12 zusammen. Anhand der Fig. 2 erkennt man, dass die beiden Rollendecken 11, 12 der Übergabe-/Übernahmeeinrichtung 10 in vergleichbarer Längsrichtung bzw. Bewegungsrichtung des Transportgutes wie die Rollendecken 3, 4 des Transportwagens in seiner angekoppelten Position an die Übergabe-/Übernahmeeinrichtung 10 verlaufen. Außerdem sind die Rollendecken 11, 12 der Übergabe-/Übernahmeeinrichtung 10 parallel zueinander verlaufend und mit Abstand zueinander angeordnet.

Sobald also der Transportwagen an die Übergabe-/Übernahmeeinrichtung 10 angekoppelt ist, lassen sich die jeweils auf den Rollendecken 3, 4 befindlichen Transportgüter oder das Transportgut problemlos auf die Plattform 11, 12 der Übergabe-/Übernahmeeinrichtung 10 überschieben. Grundsätzlich kann auch umgekehrt vorgegangen werden. Dann wird das Transportgut von der Plattform 11, 12 auf die Rollendecken 3, 4 des Transportwagens hinübergeschoben. Tatsächlich ist die Auslegung so getroffen, dass die beiden Plattformen 3, 4 von dem Transportwagen einerseits und die beiden Plattformen 11, 12 der Übergabe-/Übernahmeeinrichtung 10 andererseits aneinander angepasst sind. Das bedeutet im Beispielfall, dass die beiden jeweiligen Plattformen 3, 4; 11, 12 in an die Übergabe-/Übernahmeeinrichtung 10 angekoppeltem Zustand des Transportwagens eine in etwa ebenengleiche Anordnung zueinander erfahren. Im Übrigen stellt die Ankopplung des Transportwagens an die Übergabe-/Übernahmeeinrichtung 10 sicher, dass das Transportgut praktisch absatzfrei und im Wesentlichen distanzfrei von den beiden Rollendecken 3, 4 auf die Rollendecken 11, 12 überführt werden kann. Dazu sind relativ geringe Bedienkräfte erforderlich, weil mit der schiebenden Beaufschlagung des Transportgutes eine rollende Bewegung der einzelnen Rollen der Rollendecken 3, 4; 11, 12 mit geringer Reibung einhergeht.

Für die Ankopplung des Transportwagens an die Übergabe-/Übernahmeeinrichtung 10 ist es lediglich erforderlich, dass die Führungseinheit 8 mit der Gegenführungseinheit 9 wechselwirkt. Zu diesem Zweck ist die Führungseinheit 8 im Ausführungsbeispiel als umgekehrt - U-förmige Führungsschiene 8 ausgebildet. Bei der Gegenführungseinheit 9 handelt es sich demgegenüber um eine Rollenanordnung 9, die sich in die Führungsschiene 8 einfädeln lässt. Die Rollenanordnung bzw. Gegenführungseinheit 9 setzt sich aus einzelnen in Transportrichtung T angeordneten Rollen zusammen, die jeweils an die Übergabe-/Übernahmeeinrichtung 10 angeschlossen sind. Tatsächlich erkennt man anhand der Fig. 2, dass die besagten Rollen über vertikale Drehachsen verfügen und dazu vertikal an eine demgegenüber überwiegend horizontal orientierte Tragplatte 13 angeschlossen sind.

Sobald nun die Führungsschiene 8 mit einem frontseitigen Führungstrichter am Transportwagen die fraglichen Rollen bzw. die Gegenführungseinheit 9 übergreift, werden die Rollen unmittelbar in die umgekehrt - U-förmige Führungsschiene 8 eingefädelt. Zugleich wird der Transportwagen bei diesem Vorgang gegenüber der Übergabe-/Übernahmeeinrichtung 10 positioniert und ausgerichtet sowie an die Übergabe-/Übernahmeeinrichtung 10 angekoppelt. Tatsächlich erfolgt dieser Vorgang derart, dass hierzu der Transportwagen größtenteils in der Transportrichtung T und quer zur Längserstreckung der Übergabe-/Übernahmeeinrichtung 10 verfahren wird. Die Längserstreckung der Übergabe-/Übernahmeeinrichtung 10 wird von den zugehörigen Rollendecken 11, 12 bzw. deren Erstreckung vorgegeben. Jedenfalls wird der Transportwagen im Wesentlichen quer zur Längserstreckung der Übergabe-/Übernahmeeinrichtung 10 in seiner Transportrichtung T verfahren. Dabei sorgt die Führungseinheit bzw. umgekehrt - U-förmige Führungsschiene 8 dafür, dass es in Verbindung mit der Gegenführungseinheit 9 bzw. den vertikal orientierten Rollen an der Übergabe-/Übernahmeeinrichtung 10 zu der gewünschten Ankopplung kommt.

Zusätzliche Positioniermittel 14 sorgen in diesem Zusammenhang dafür, dass der Transportwagen exakt gegenüber der Übergabe-/Übernahmeeinrichtung 10 positioniert wird. Bei den Positioniermitteln 14 handelt es sich im Ausführungsbeispiel um mechanische Positioniermittel 14, die im gezeigten Beispiel nach der Fig. 2 auf einer Transportfläche 15 angeordnet sind. Bei der Transportfläche 15 handelt es sich nicht einschränkend um einen Boden der Werkshalle oder dergleichen. Das mechanische Positioniermittel 14 mag als Markierung, Anschlagkeil etc. ausgebildet sein. Alternativ oder zusätzlich können aber auch elektronische und/oder optische Positioniermittel zum Einsatz kommen, wie sie in der Einleitung bereits beschrieben worden sind.

Im Ausführungsbeispiel ist die Führungseinheit bzw. Führungsschiene 8 an das Fahrgestell 2 angeschlossen. Es ist aber auch möglich, alternativ oder zusätzlich die Führungseinheit 8 an die Plattform 3, 4 anzuschließen. Da jedoch typischerweise das Fahrgestell 2 einerseits und die Plattform 3, 4 andererseits getrennt voneinander ausgebildet sind, wird im gezeigten Beispielfall eine Auslegung derart verfolgt, dass die Führungsschiene 8 mit dem Fahrgestell 2 eine Verbindung, vorliegend eine Schweißverbindung eingeht. Durch die getrennte Auslegung des Fahrgestells 2 einerseits und der Plattform 3, 4 andererseits des Transportwagens können das Fahrgestell 2 zum einen und die Plattform 3, 4 zum anderen getrennt voneinander oder auch gemeinsam genutzt werden. So lässt sich beispielsweise die Plattform 3, 4 zusammen mit dem darauf befindlichen Transportgut mit Hilfe eines Gabelstaplers von dem Fahrgestell 2 bei Bedarf abheben oder auf dieses aufsetzen.

Anhand der Fig. 1 erkennt man, dass im Ausführungsbeispiel das Fahrgestell 2 des erfindungsgemäßen Transportwagens mit insgesamt drei Paaren an Laufrollen 1 ausgerüstet ist. Dabei sind lediglich die an der Frontseite und der Deichsel 6 zugewandten Seite angeordneten Laufrollen 1 als Lenkrollen ausgelegt. Die übrigen Laufrollen 1 stellen demgegenüber Bockrollen dar.

Des Weiteren ist die Übergabe-/Übernahmeeinrichtung 10 entsprechend der Darstellung nach Fig. 2 im Beispielfall ortsfest ausgebildet. Im Rahmen der Erfindung kann die Übergabe-/Übernahmeeinrichtung 10 aber auch ortsvariabel ausgeführt sein. In diesem Fall verfügt die Übergabe-/Übernahmeeinrichtung 10 über nicht dargestellte Laufrollen, so dass sie praktisch an beliebiger Stelle innerhalb der Werkshalle bzw. an beliebiger Position im Vergleich zur Transportfläche 15 positioniert werden kann. So oder so verfügt der Transportwagen über eine außerordentliche Spurtreue, welche es ermöglicht, einzelne Transportwagen mit ihrer jeweiligen Führungsschiene 8 wie beschrieben gegenüber der zugehörigen Übergabe-/Übernahmeeinrichtung 10 einwandfrei anzukoppeln und zu positionieren.

Selbstverständlich können auch sämtliche Transportwagen des Routenzuges auf vergleichbare Weise gegenüber der Übergabe-/Übernahmeeinrichtung 10 ausgerichtet und an diese angekoppelt werden. Dabei ist es lediglich erforderlich, den Transportwagen mit dem am Entnahmeort gewünschten Transportgut gegenüber der Übergabe-/Übernahmeeinrichtung 10 anzuhalten und mit Hilfe der Positioniermittel 14 auszurichten. Im Anschluss daran wird das gewünschte Transportgut schiebend auf die Übernahme-/Übergabeeinrichtung 10 hinüber bewegt und kann dann am Entnahmeort weiter verarbeitet werden.

## Patentansprüche

1. Kombination aus einem Transportwagen zur Aufnahme von Transportgut und einer Übergabe-/Übernahmeeinrichtung (10), vorzugsweise für die Versorgung von Fertigungs- bzw. Montagelinien der industriellen Serienfertigung, wobei
- der Transportwagen mit einem mit Laufrollen (1) bestückten Fahrgestell (2), und mit einer das Transportgut tragenden Plattform (3, 4) ausgerüstet ist, wobei ferner
- zusätzlich wenigstens eine Führungseinheit (8) am Transportwagen zur Ankopplung an die Übergabe-/Übernahmeeinrichtung (10) für das Transportgut vorgesehen ist, und wobei
- die Führungseinheit (8) mit wenigstens einer Gegenführungseinheit (9) an der Übergabe-/Übernahmeeinrichtung (10) zur Ankopplung wechselwirkt,
**dadurch gekennzeichnet, dass**
- die Führungseinheit (8) als im Wesentlichen in Transportrichtung (T) des Transportwagens verlaufend ausgerichtete Führungsschiene (8) und die Gegenführungseinheit (8) als in die Führungsschiene (8) einfädelbare Rollenanordnung (8) ausgebildet ist, wobei
- sich die Rollenanordnung (9) aus einzelnen in der Transportrichtung (T) angeordneten Rollen zusammensetzt, die jeweils an die Übergabe-/Übernahmeeinrichtung (10) angeschlossen sind.

2. Kombination nach Anspruch 1, **dadurch gekennzeichnet, dass** der Transportwagen als Routenzug-Transportwagen ausgebildet ist.

3. Kombination nach Anspruch 1 oder 2, **dadurch gekennzeichnet, dass** die Führungseinheit (8) an das Fahrgestell (2) und/oder die Plattform (3, 4) angeschlossen ist.

4. Kombination nach einem der Ansprüche 1 bis 3, **dadurch gekennzeichnet, dass** mechanische und/oder elektronische Positioniermittel (14) zur Ausrichtung gegenüber der Übergabe-/Übernahmeeinrichtung (10) vorgesehen sind.

5. Kombination nach Anspruch 4, **dadurch gekennzeichnet, dass** die Positioniermittel (14) an der Übergabe-/Übernahmeeinrichtung (10) und/oder an oder auf einer Transportfläche (15) angeordnet sind.

6. Kombination nach einem der Ansprüche 1 bis 5, **dadurch gekennzeichnet, dass** das Fahrgestell (2) und die Plattform (3, 4) zur einzelnen und gemeinsamen Nutzung getrennt voneinander ausgelegt sind.

7. Verfahren zum vorzugsweise staplerfreien Transport und Umschlag von Transportgut mittels einer Kombination aus einem Transportwagen zur Aufnahme des Transportgutes und einer Übergabe-/Übernahmeeinrichtung (10), beispielsweise im Zuge der Versorgung von Fertigungs- bzw. Montagelinien der industriellen Serienfertigung, wonach der mit einem mit Laufrollen (1) bestückten Fahrgestell (2) und mit einer das Transportgut tragenden Plattform (3, 4) ausgerüstete Transportwagen mit Hilfe wenigstens einer zusätzlichen und als im Wesentlichen in Transportrichtung (T) des Transportwagens verlaufend ausgerichteten Führungsschiene (8) ausgebildeten Führungseinheit (8) an die Übergabe-/Übernahmeeinrichtung (10) für das Transportgut angekoppelt wird, indem die Führungseinheit (8) mit wenigstens einer Gegenführungseinheit (9) an der Übergabe-/Übernahmeeinrichtung (10) zur Ankopplung wechselwirkt und hierzu die Gegenführungseinheit (9) als in die Führungsschiene (8) einfädelbare Rollenanordnung (9) ausgebildet ist, wobei sich die Rollenanordnung (9) aus einzelnen in der Transportrichtung (T) angeordneten Rollen zusammensetzt, die jeweils an die Übergabe-/Übernahmeeinrichtung (10) angeschlossen sind.

8. Verfahren nach Anspruch 7, **dadurch gekennzeichnet, dass** der Transportwagen im Wesentlichen quer zur Längserstreckung der Übergabe-/Übernahmeeinrichtung (10) in Transportrichtung (T) verfahren wird und dabei seine Führungseinheit (8) mit wenigstens der Gegenführungseinheit (9) an der Übergabe-/Übernahmeeinrichtung (10) zur Ankopplung wechselwirkt.

## Claims

1. Combination of a trolley for collecting cargo and a transfer/receiving device (10), preferably for the supply of manufacturing and assembly lines in industrial mass production, wherein
- the trolley is equipped with a chassis (2) fitted with rollers (1) and with a platform (3, 4) for supporting the cargo, wherein further
- at least one guide unit (8) is also provided on the trolley for coupling to the transfer/receiving device (10) for the cargo, and wherein
- the guide unit (8) interacts with at least one counter-operating guide unit (9) on the transfer/ receiving device (10) for coupling,
**characterised in that**
- the guide unit (8) is constructed as a guide rail (8) that is aligned to extend essentially in the direction of transport (T) of the trolley, and the counter-operating guide unit (8) is constructed as a roller arrangement (8) that can be threaded into the guide rail (8), wherein
- the roller arrangement (9) is made up of individual rollers arranged in the direction of transport (T), each of which is connected individually to the transfer/ receiving device (10).

2. Combination according to claim 1, **characterised in that** the trolley is designed as a tugger train trolley.

3. Combination according to claim 1 or 2, **characterised in that** the guide unit (8) is connected to the chassis (2) and/or the platform (3, 4).

4. Combination according to any one of claims 1 to 3, **characterised in that** mechanical and/or electronic positioning means (14) are provided for alignment with respect to the transfer/receiving device (10).

5. Combination according to claim 4, **characterised in that** the positioning means (14) are arranged on the transfer/ receiving device (10) and/or on a transport surface (15).

6. Combination according to any one of claims 1 to 5, **characterised in that** the chassis (2) and the platform (3, 4) is/are designed separately from each other for individual and shared use.

7. A method for preferably forklift free transportation and handling of cargo by means of a combination of trolley for collecting the cargo and a transfer/receiving device (10), preferably in the course of the supply of manufacturing and assembly lines for industrial mass production, according to which the trolley equipped with a chassis (2) fitted with rollers (1) and with a platform (3, 4) supporting the cargo is couple to the transfer/ receiving device (10) for the cargo with the aid of at least one additional guide unit (8) which is designed as a guide rail (8) and is aligned to extend essentially in the direction of transport (T) of the trolley in that the guide unit (8) interacts with at least one counter-operating guide unit (9) on the transfer/receiving device (10) for coupling, and to this end the counter-operating guide unit (9) is designed as a roller arrangement (9) that can be threaded into the guide rail (8), wherein the roller arrangement (9) is made up of individual rollers arranged in the direction of transport (T), each of which is connected individually to the transfer/receiving device (10).

8. Method according to claim 7, **characterised in that** the trolley travels in direction of transport (T), essentially transversely to the longitudinal extension of the transfer/receiving device (10), and in so doing the guide unit (8) thereof interacts with at least the counter-operating guide unit (9) on the transfer/receiving device (10) for coupling.

## Revendications

1. Combinaison entre un chariot de transport destiné à recevoir des marchandises et un dispositif de transfert/réception (10), de préférence pour l'alimentation de chaînes de fabrication ou de montage de la production industrielle en série, dans laquelle
- le chariot de transport est équipé d'un châssis (2) muni de roulettes (1), et d'une plateforme (3, 4) portant les marchandises, dans laquelle
- au moins une unité de guidage (8) supplémentaire destinée à être accouplée au dispositif de transfert/réception (10) est en outre prévue sur le chariot de transport pour les marchandises, et dans laquelle
- l'unité de guidage (8) interagit avec au moins une unité de guidage inverse (9) sur le dispositif de transfert/réception (10) pour l'accouplement,
**caractérisée en ce que**
- l'unité de guidage (8) est conçue comme un rail de guidage (8) orienté de manière à s'étendre essentiellement dans la direction de transport (T) du chariot de transport, et l'unité de guidage inverse (8) est conçue comme un ensemble de roulettes (8) apte à être enfilé dans le rail de guidage (8), où
- l'ensemble de roulettes (9) est constitué de roulettes individuelles disposées dans la direction de transport (T), respectivement reliées au dispositif de transfert/réception (10).

2. Combinaison selon la revendication 1, **caractérisée en ce que** le chariot de transport est conçu comme un chariot de transport pour un train de convoyage.

3. Combinaison selon la revendication 1 ou 2, **caractérisée en ce que** l'unité de guidage (8) est reliée au châssis (2) et/ou à la plateforme (3, 4).

4. Combinaison selon l'une des revendications 1 à 3, **caractérisée en ce qu'**il est prévu des moyens de positionnement mécaniques et/ou électroniques (14) pour l'orientation par rapport au dispositif de transfert/réception (10).

5. Combinaison selon la revendication 4, **caractérisée en ce que** les moyens de positionnement (14) sont montés sur le dispositif de transfert/réception (10) et/ou sur une surface de transport (15).

6. Combinaison selon l'une des revendications 1 à 5, **caractérisée en ce que** le châssis (2) et la plateforme (3, 4) sont conçus séparément l'un de l'autre pour une utilisation individuelle ou conjointe.

7. Procédé pour le transport et le transbordement de marchandises, de préférence sans chariot élévateur, à l'aide d'une combinaison entre un chariot de transport destiné à recevoir des marchandises et un dispositif de transfert/réception (10), par exemple au cours de l'alimentation de chaînes de fabrication ou de montage de la production industrielle en série, selon lequel le chariot de transport équipé d'un châssis (2) muni de roulettes (1) et d'une plateforme (3, 4) portant les marchandises est accouplé au dispositif de transfert/réception (10) pour les marchandises à l'aide d'au moins une unité de guidage (8) supplémentaire conçue comme un rail de guidage (8) orienté de manière à s'étendre essentiellement dans la direction de transport (T) du chariot de transport, l'unité de guidage (8) interagissant avec au moins une unité de guidage inverse (9) sur le dispositif de transfert/réception (10) pour l'accouplement, et l'unité de guidage inverse (9) étant pour cela conçue comme un ensemble de roulettes (9) apte à être enfilé dans le rail de guidage (8), l'ensemble de roulettes (9) étant constitué de roulettes individuelles disposées dans la direction de transport (T), lesquelles sont respectivement reliées au dispositif de transfert/réception (10).

8. Procédé selon la revendication 7, **caractérisé en ce que** le chariot de transport est déplacé essentiellement transversalement à l'étendue longitudinale du dispositif de transfert/réception (10) dans la direction de transport (T), pendant que son unité de guidage (8) interagit au moins avec l'unité de guidage inverse (9) sur le dispositif de transfert/réception (10) pour l'accouplement.
